# EUROPEAN PATENT APPLICATION

(11) **EP 4 807 711 A1**
(43) Date of publication of application: **16.09.2026**
(21) Application number: 26150642.2
(22) Date of filing: 07.01.2026
(51) Int. Cl.: G08B 29/18, G06N 20/00, G06N 5/04, G08B 13/196

(54) **SYSTEM AND METHOD FOR VIDEO SELECTION AND ANNOTATION**

(30) Priority: 13.03.2025 US 202563771397 P
(71) Applicant: Milestone Systems A/S, 2605 Brøndby (DK)
(72) Inventor: NASROLLAHI, Kamal, Brondby (DK); DVIR, Igal, 3093109 9 Hakalanit St, Zichron Yaakov (IL); NORTON, Barry, Brondby (DK); ABELA, Louise, Brondby (DK)
(74) Representative: Pearl Cohen UK

(57) **Abstract**

A system and method for generating an alarm response agent application, the method including: receiving the at least one reasoning from the human user for non-resolution of the first alarm; reproducing the at least one reasoning for non-resolution of the first alarm, wherein when the at least one reasoning for non-resolution of the first alarm is reproducible, record the at least one reasoning for non-resolution of the first alarm and suppress the first alarm; receiving a request from the human user to suppress a second alarm when the at least one reasoning for non-resolution of the first alarm is identified from event data of the second alarm; creating an event-specific suppression agent application to suppress the second alarm when the at least one reasoning for non-resolution of the first alarm is reproducible from event data for the second alarm.

## Description

### CROSS REFERENCE TO RELATED APPLICATIONS

This application claims the benefit of U.S. Provisional Patent Application No. 63/771,397, filed on March 13, 2025 which is hereby incorporated by reference in its entirety.

### TECHNICAL FIELD OF THE INVENTION

The present invention relates generally to the categorization of events, specifically to the review of categories for events based on human input in combination with artificial intelligence-based agent applications.

### BACKGROUND OF THE INVENTION

In physical security systems, sensors are used to provide insight into incidents that may have security or safety implications. These sensors might include, for instance, CCTV cameras with built-in video analytics (such as patent US8736701B2 - "Video camera having relational video database with analytics-produced metadata"), dry contact sensors for doors and gates (such as Visonic MCT-350), passive IR (PIR) sensors to detect activity (such as patent application US20090309029A1 - "Passive Infrared detectors"), motion sensors on smart fences (such as patent application EP87106498A - "Security Fence"), or RADAR- and LIDAR-based sensors to detect outdoor activity (such as Magos SR-500 RADAR and Optex Redscan Pro RLS-50100V LIDAR, respectively).

In physical security systems, whether directly managing these sensors or integrating their data from other management systems, sensor data may be used to produce events, the software response to which can be used to direct human attention towards an incident in progress or later in review. Both modalities are of particular relevance within video management systems, where live or recorded video might be used by a human operator to confirm the incident, its severity, and the need for a response. With or without video confirmation, an incident response might involve other costly activities, such as the dispatch of a human security guard or responder.

Physical security systems are commonly built around the presupposition of generic sensor-incident type relationships. Where more sophisticated settings are possible, for instance using a secondary sensor and its derived data, or higher-fidelity video analytics (as referred to for example in US Patent No. US 12,183,075 B2), either fixed rules for their combination are provided, or the user has limited means to specify such a combination, appropriate to their level of technical skill.

Thus, there is a need for a solution that can review the generation of events or alerts for such events based on contextual records, automated analysis of the video, or from previously recorded decision making processes.

### SUMMARY OF THE INVENTION

Embodiments of the present invention may improve the technology of alarm responses for events by, for example, intelligently creating agent applications that reproduce reasonings for the resolution or non-resolution of reasonings for alarms.

Embodiments of the present invention may improve the operation of physical security systems by reducing computational load and false positive alarm rates through context-aware agent applications trained on human reasoning.

Improvement and advantages of embodiments of the invention may include the relationship between sensors and generated alarms for events. Embodiments may more efficiently and more accurately suppress alarms for events or may more efficiently and more accurately create alarms for events. This can be achieved by providing software, e.g. artificial intelligence applications in form of (AI) agents, with user definitions of relationships between sensors, their received raw data, derived metadata; and events, and incident types, such as alarms or suppressed alarms. Agent applications may attempt the reproduction of reasonings for the resolution or non-resolution of alarms that is based on human decision making, and can cause either the suppression of alarms for events, e.g. where an incident can be ruled out or ignored due to contextual reasons, or the creation of alarms for events, e.g. related to a more specific type of incident/response, based on human intent.

One embodiment includes a method of generating an alarm response agent application, the method including: requesting a human user to provide at least one reasoning for non-resolution of a first alarm for event data having an event type; receiving, at a computer memory, over a user interface, the at least one reasoning from the human user for non-resolution of the first alarm; reproducing, by an agent application via the computer memory, the at least one reasoning for non-resolution of the first alarm, wherein when the at least one reasoning for non-resolution of the first alarm is reproducible, recording the at least one reasoning for non-resolution of the first alarm and suppress the first alarm; receiving, at the computer memory, over the user interface, a request from the human user to suppress a second alarm when the at least one reasoning for non-resolution of the first alarm is identified from event data of the second alarm; creating, by the agent application via the computer memory, an event-specific suppression agent application to suppress the second alarm when the at least one reasoning for non-resolution of the first alarm is reproducible from event data for the second alarm.

In some embodiments, the at least one reasoning from the human user includes one or more of: textual data, image data and video data.

In some embodiments, the event data includes contextual data retrieved from one or more of: video data associated with a device, image data associated with a device, image metadata, video metadata, system information of the device used to retrieve the image data or video data, or data encoded in a knowledge graph.

In some embodiments, the at least one reasoning from the human user includes features derived from one of: segmented image data and video data.

In some embodiments, the agent application reproduces the at least one reasoning by generating a prompt from the at least one reasoning received from the human user and submitting the prompt to at least one of: a Large Language Model "LLM" and a Vision Language Model "VLM".

In some embodiments, the reproducibility of the human user's reasoning is assessed with respect to the first alarm and associated event data selected from one or more of: image, video, associated metadata, associated embeddings and knowledge graph.

In some embodiments, creating the event-specific suppression agent application includes one of: a) generating a prompt from the reproduced reasoning including instructions for suppressing the alarms for future event data having the same event type; and b) generating an executable script from the reproduced reasoning including instructions for suppressing the alarms for future event data having the same event type.

In some embodiments, when the at least one reasoning from the human user for non-resolution of the alarm cannot be reproduced by the agent application, adding the reproduction attempt as a negative example to a training set of reasonings for the reproduction of the at least one reasoning, and re-attempting to request the agent application to reproduce the at least one reasoning via the inclusion of contextual data, wherein the contextual data includes the training set of negative examples of reasonings.

One embodiment may include a method of generating an alarm response agent application, the method including: requesting a human user to provide a reasoning for resolution of an alarm for event data having an event type; receiving, at a computer memory, over a user interface, at least one reasoning from the human user for resolution of the alarm; reproducing, by an agent application via the computer memory, the at least one reasoning for resolution of the first alarm, wherein when the at least one reasoning for resolution of the first alarm is reproducible, record the at least one reasoning for resolution of the first alarm and create the first alarm; receiving, at the computer memory, over the user interface, a request from the human user to generate a second alarm when the at least one reasoning for resolution of the first alarm is identified from event data of the second alarm; creating, by the agent application via the computer memory, an event-specific creation agent application to create the second alarm when the at least one reasoning for resolution of the first alarm is reproducible from event data for the second alarm.

In some embodiments, the reasoning from the human user includes one or more of: textual data, image data and video data.

In some embodiments, the event data includes contextual data retrieved from one or more of: video data associated with a device, image data associated with a device, image metadata, video metadata, system information of the device used to retrieve the image data or video data, or data encoded in a knowledge graph.

In some embodiments, the at least one reasoning from the human user includes features derived from one of: segmented image data and video data.

In some embodiments, the agent application reproduces the at least one reasoning by generating a prompt from the at least one reasoning received from the human user and submitting the prompt to at least one of: a LLM and a VLM.

In some embodiments, wherein creating the event-specific creation agent application includes one of: a) generating a prompt from the reproduced reasoning including instructions for creating the alarms for future event data having the same event type; and b) generating an executable script from the reproduced reasoning including instructions for creating the alarms for future event data having the same event type.

In some embodiments, wherein when the at least one reasoning from the human user for resolution of the alarm cannot be reproduced by the agent application, adding the reproduction attempt as a negative example to a training set of reasonings for the reproduction of the at least one reasoning, and re-attempting to request the agent application to reproduce the at least one reasoning via the inclusion of contextual data, wherein the contextual data includes the training set of negative examples of reasonings.

One embodiment may include an alarm response system for the association of alarms to events based on previously recorded events, the system including: a computer memory arranged to receive event data from one or more of: a device, a camera and a managing non-camera device; and a computing processor arranged to: request a human user to provide at least one reasoning for non-resolution of a first alarm for event data having an event type; receive, at a computer memory, over a user interface, the at least one reasoning from the human user for non-resolution of the first alarm; reproduce, by an agent application via the computer memory, the at least one reasoning for non-resolution of the first alarm, wherein when the at least one reasoning for non-resolution of the first alarm is reproducible, record the at least one reasoning for non-resolution of the first alarm and suppress the first alarm; receive, at the computer memory, over the user interface, a request from the human user to suppress a second alarm when the at least one reasoning for non-resolution of the first alarm is identified from event data of the second alarm; create, by the agent application via the computer memory, an event-specific suppression agent application to suppress the second alarm when the at least one reasoning for non-resolution of the first alarm is reproducible from event data for the second alarm.

One embodiment may include an alarm response system for the association of alarms to events based on previously recorded events, the system including: a computer memory arranged to receive event data from one or more of: a device, a camera and a managing non-camera device; and a computing processor arranged to: request a human user to provide a reasoning for resolution of an alarm for event data having an event type; receive, at a computer memory, over a user interface, at least one reasoning from the human user for resolution of the alarm; reproduce, by an agent application via the computer memory, the at least one reasoning for resolution of the first alarm, wherein when the at least one reasoning for resolution of the first alarm is reproducible, record the at least one reasoning for resolution of the first alarm and create the first alarm; receive, at the computer memory, over the user interface, a request from the human user to generate a second alarm when the at least one reasoning for resolution of the first alarm is identified from event data of the second alarm; create, by the agent application via the computer memory, an event-specific creation agent application to generate the second alarm when the at least one reasoning for resolution of the first alarm is reproducible from event data for the second alarm.

One embodiment may include a non-transitory computer readable medium for generating an alarm response agent application including a set of instructions that, when executed, cause at least one computer processor to: request a human user to provide at least one reasoning for non-resolution of a first alarm for event data having an event type; receive, at a computer memory, over a user interface, the at least one reasoning from the human user for non-resolution of the first alarm; reproduce, by an agent application via the computer memory, the at least one reasoning for non-resolution of the first alarm, wherein when the at least one reasoning for non-resolution of the first alarm is reproducible, record the at least one reasoning for non-resolution of the first alarm and suppress the first alarm; receive, at the computer memory, over the user interface, a request from the human user to suppress a second alarm when the at least one reasoning for non-resolution of the first alarm is identified from event data of the second alarm; create, by the agent application via the computer memory, an event-specific suppression agent application to suppress the second alarm when the at least one reasoning for non-resolution of the first alarm is reproducible from event data for the second alarm.

One embodiment may include a non-transitory computer readable medium for generating an alarm response agent application including a set of instructions that, when executed, cause at least one computer processor to: request a human user to provide a reasoning for resolution of an alarm for event data having an event type; receive, at a computer memory, over a user interface, at least one reasoning from the human user for resolution of the alarm; reproduce, by an agent application via the computer memory, the at least one reasoning for resolution of the first alarm, wherein when the at least one reasoning for resolution of the first alarm is reproducible, record the at least one reasoning for resolution of the first alarm and suppress the first alarm; receive, at the computer memory, over the user interface, a request from the human user to generate a second alarm when the at least one reasoning for resolution of the first alarm is identified from event data of the second alarm; create, by the agent application via the computer memory, an event-specific creation agent application to generate the second alarm when the at least one reasoning for resolution of the first alarm is reproducible from event data for the second alarm.

These, additional, and/or other aspects and/or advantages of the present invention may be set forth in the detailed description which follows; possibly inferable from the detailed description; and/or learnable by practice of the present invention.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
FIG. 1 depicts a flowchart of methods of generating an alarm response agent application, according to some embodiments of the present invention.
FIG. 2 depicts a flowchart of methods of generating an alarm response agent application, according to some embodiments of the present invention.
FIG. 3 is a schematic drawing of a system for generating an alarm response agent application, according to some embodiments of the invention.
FIG. 4 is an illustration of a workflow which exemplifies the human user-based separation of alarms for events into non-resolved alarms and resolved alarms, according to some embodiments of the present invention.
FIG. 5 is an illustration of a workflow for events for which a management application has decided to raise an alarm to retrieve a human screening for the alarm and event, according to some embodiments of the present invention.
FIG. 6A is an illustration of a workflow for managing events via an event management application which associates events with a suppression agent or an alarm creation agent, according to some embodiments of the present invention.
FIG. 6B is an illustration of a workflow for managing events via an event management application for the case that an event is associated with at least one alarm creation agent and in view of context added to the event an agent's completion signals to create a new alarm for the event, according to some embodiments of the present invention.
FIG. 7 shows a block diagram of an exemplary computing device which may be used with embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF EMBODIMENTS OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Before at least one embodiment of the invention is explained in detail, it is to be understood that the invention is not limited in its application to the details of construction and the arrangement of the components set forth in the following description or illustrated in the drawings. The invention is applicable to other embodiments that may be practiced or carried out in various ways as well as to combinations of the disclosed embodiments. Also, it is to be understood that the phraseology and terminology employed herein is for the purpose of description and should not be regarded as limiting.

Unless specifically stated otherwise, as apparent from the following discussions, it is appreciated that throughout the specification discussions utilizing terms such as "processing", "computing", "calculating", "determining", "enhancing" or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices. Any of the disclosed modules or units may be at least partially implemented by a computer processor.

As used herein, "machine learning", "machine learning algorithms", "machine learning models", "ML", or similar, may refer to models built by algorithms in response to/based on input sample or training data. ML models may make predictions or decisions without being explicitly programmed to do so. ML models require training/learning based on the input data, which may take various forms.

ML models may, for example, include Large Language Models (LLM) such as Generative Pre-Trained Transformer (GPT), Bidirectional Encoder Representations from Transformers (BERT), Pathways Language Model (PaLM) and the like, (artificial) neural networks (NN), decision trees, regression analysis, Bayesian networks, Gaussian networks, genetic processes, etc. Additionally or alternatively, ensemble learning methods may be used which may use multiple/modified learning algorithms, for example, to enhance performance. Ensemble methods, may, for example, include "Random forest" methods or "XGBoost" methods.

It will be understood that any subsequent reference to "machine learning", "machine learning algorithms", "machine learning models", "ML", or similar, may refer to any/all of the above ML examples, as well as any other ML models and methods as may be considered appropriate.

"Videos" or "video files" may be sequences of still images (called frames) displayed rapidly - typically 24 to 60 frames per second - to create the illusion of continuous motion. They often include synchronized audio and may contain additional data such as subtitles or metadata. In digital form, videos can be stored as files that use, for example, a container format (e.g., MP4, AVI, MKV) which holds the video, audio, and metadata streams.

As used herein, "sensors" may be physical devices that measure aspects of the world. For example, sensors can directly measure physical properties of objects in the world, for instance door position sensors. For example, sensors can indirectly detect conditions in a particular environment, for instance sound sensors or devices that passively capture perturbations in the electro-magnetic spectrum, such as cameras that capture light in the visible spectrum, or beyond it by devices or cameras capturing emissions, for instance, in the infra-red spectrum. For example, sensors may be active in causing, then sensing, sonic or electromagnetic perturbations in the real world, for instance RADAR, LIDAR and infra-red spectrum cameras that emit electromagnetic fields to measure reflectance, refraction, etc.

As used herein, "physical security systems" may be a combination of hardware and software that directly or indirectly captures input (data and events) from devices including these sensors and enable responses to incidents, with or without human oversight and intervention. Responses to incidents captured by these system, e.g. in form of direct human intervention is carried out on a per-incident basis and may suffer from human oversight. Physical security systems may include assemblies of more than one distinct software system, e.g. of a Video Management System and an Access Control System.

As used herein, "agents", "agent applications" or "alarm response agents" may be artificial intelligence-based software components that are not restricted to execution at the point of human prompting, but can be triggered by events from the environment, including those systems that produce events, such as devices and systems in physical security. Agents or agent applications are defined based on conversational human input via large language models (LLMs). LLMs may be machine learning models pre-trained on large amounts of human language and which can be post-trained/tuned, for conversation and VLMs (large models trained also on images/video, etc). An "agent application" or "alarm response agent" may be a "suppression agent application" or a "creation agent application". A suppression agent application may be an artificial intelligence-based software component that can suppress an alarm for a specific event. For example, an alarm may be suppressed when a specific reasoning for non-resolution of the alarm is reproducible from event data for a previously recorded alarm which was assigned to be a reasoning for non-resolution by a human user. A creation agent application may be an artificial intelligence-based software component that can create an alarm for a specific event. For example, an alarm may be created when a specific reasoning for resolution of the alarm is reproducible from event data for a previously recorded alarm which was assigned to be a reasoning for resolution by a human user.

In some embodiments, a suppression agent modifies a hardware alarm subsystem to prevent activation of a siren or notification signal. In some embodiments, a creation agent modifies a hardware alarm subsystem to trigger activation of a siren or notification signal.

By suppressing redundant alarms, the system may, in some embodiments, reduce processor cycles and network transmission load. By automatically generating alarms only under reproducible reasoning conditions, the system may improve, in some embodiments, the reliability of event detection.

As used herein, "alarms" may be the representation of a subset of events within a physical security system that are elevated to solicit human attention. Alarms are often managed according to a workflow that commonly involves the possibility for the user to document the reason that they are closed, i.e. removed from an alarm management subsystem.

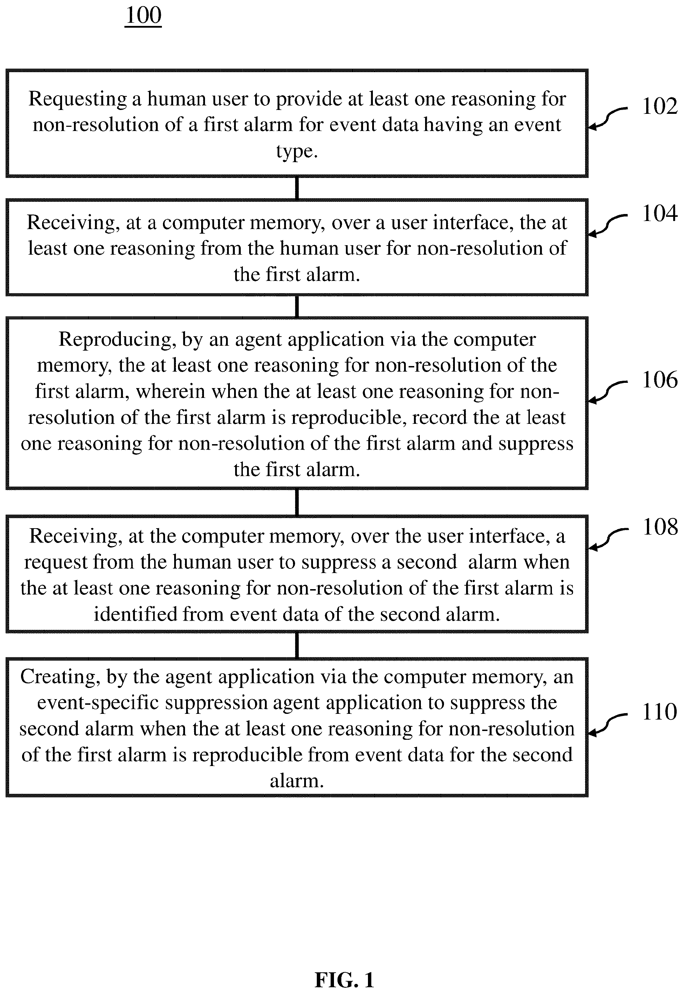

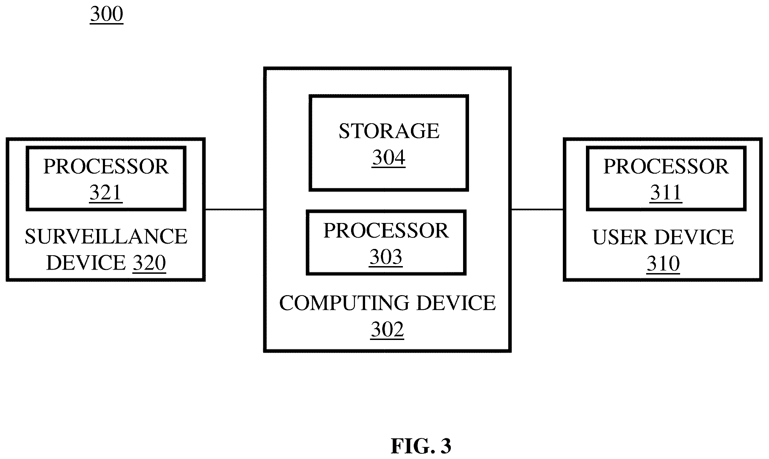

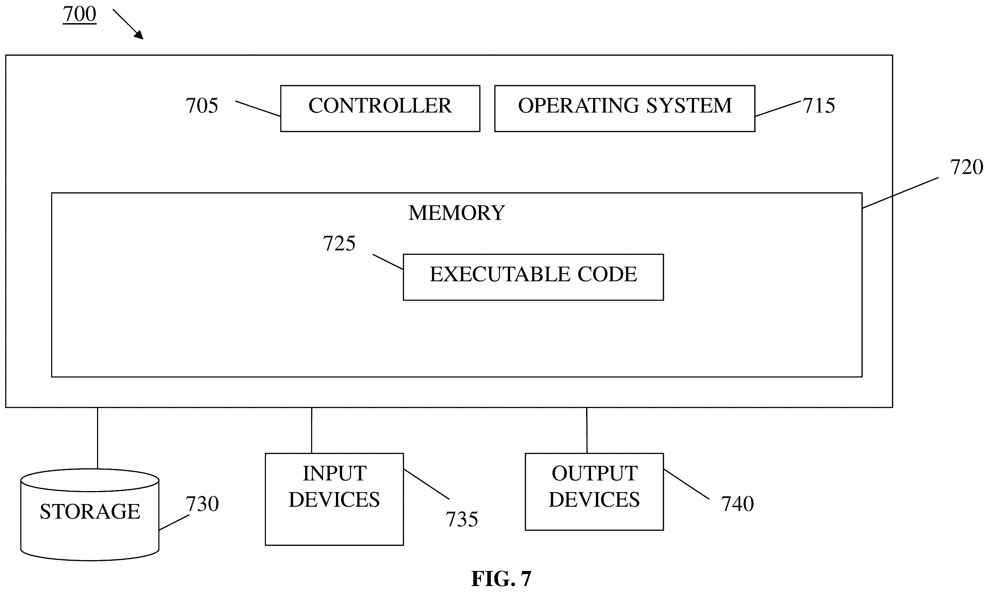

FIG. 1 shows a flowchart of an example method 100 of generating an alarm response agent application. An alarm response agent application attempts to reproduce reasonings for the resolution or non-resolution of alarms from event data. Method 100 or some operations within method 100 may be executed, for example by processor 303 of computing device 302, processor 311 of user device 210 or processor 321 of surveillance device 320 shown in Fig. 3 or computing device 700 shown in Fig. 7.

In operation 102, a human user is requested to provide at least one reasoning for non-resolution of a first alarm for event data having an event type. For example, a human user using a computing device, e.g. computing device 302, is prompted by a user interface to provide input, e.g. in textual or an audio recording, for the non-resolution of a first alarm. A reason for non-resolution of an alarm may be a known malfunctioning of an alarm or the testing of an alarm.

A human user may be, for example, a security operator, analyst, or investigator who manually reviews alarms triggered for events by surveillance systems (e.g., motion detection, unauthorized access, or facial recognition matches) to determine whether they represent true security incidents that require a resolution of the alarm, or false alarms that do not require a resolution of the alarm.

An alarm may be triggered for event data having an event type. Event data may refer to information generated when a specific action, condition, or trigger occurs within a surveillance system. This data is typically recorded by devices such as cameras, sensors, or access control systems and is used for monitoring, analysis, and security responses. Event data may be trigger-based, for example it is recorded only when a defined event happens (e.g., motion detected, door opened). It can include metadata such as time, location, device ID, and event type. An alarm may be triggered as a real-time alert, incident investigation, or behavioral analytics.

An example of an event type may be a motion detection event. Such an event may be triggered by a camera which detects movement in a restricted area. Event data for such an event may include, for example: Timestamp, camera ID, motion zone coordinates, and video clip reference.

An example for an event type may be an access control event. Such an event may be triggered when a person uses an access card to enter a secure door. Event data captured in such an event may be, for example: Cardholder ID, door location, access time, access result (granted/denied).

In operation 104, the at least one reasoning from the human user for non-resolution of the first alarm is received at a computer memory, over a user interface. An at least one reasoning from a human user may include one or more of: textual data, image data, and video data. Textual data may include a written explanation by the human user, e.g. "unable to verify, poor visibility". Image data may include a frame from a camera feed, e.g. a snapshot showing glare or obstruction. Video data may include a short clip of an event or camera feed, e.g. a 10 -second clip showing an unclear motion. Reasonings received from a human user may be technical, operational, or human-related reasons. For example, technical reasons may include system malfunction or connectivity issues: A camera, sensor, or network connection may fail, preventing the user from accessing video or event data needed to verify the alarm. In some embodiments, an at least one reasoning from the human user includes a segmented image and textual data. A segmented image may be an image that has been processed to divide it into distinct regions or segments, each representing a specific object, area, or feature of interest. For example, in a semantic segmentation, each pixel is classified into a category (e.g., person, road, building); every pixel belonging to a person may be colored blue; background pixels may be colored gray.

In operation 106, an agent application may reproduce, via the computer memory, the at least one reasoning for non-resolution of the first alarm. When the at least one reasoning for non-resolution of the first alarm is reproducible, the at least one reasoning for non-resolution of the first alarm may be recorded and the first alarm may be suppressed, e.g. by the agent application.

In operation 108, a request from the human user may be received, at the computer memory, over the user interface, to suppress a second alarm when the at least one reasoning for non-resolution of the first alarm is identified from event data of the second alarm.

In operation 110, an event-specific suppression agent application may be created, by the agent application via the computer memory, to suppress the second alarm when the at least one reasoning for non-resolution of the first alarm is reproducible from event data for the second alarm. In some embodiments, an agent application reproduces the at least one reasoning by generating a prompt from the at least one reasoning received from the human user and submitting the prompt to at least one of: a Large Language Model "LLM" and a Vision Language Model "VLM". For example, an event may be raised by an access control system when a door is open for longer than a pre-defined threshold. Such a case would generally lead to an alarm being raised by the access control system. As disclosed herein, a human user could review and cancel such an alarm. In addition, a human user may provide a reasoning for the case that if a person is still within a frame of the camera that provides a view onto the door, it is not necessary to raise an alarm. As a result, the alarm can be suppressed. An LLM can review as to whether a VLM used in the assessment of an event has sufficient understanding of the event (e.g. the event data and context). For example, an LLM may review e.g., if there is a person near the door, to reproduce this event and, if successfully reproduced, a suppression agent may be initiated to try to do so again in future occurrences. In the reproduction of at least one reasoning for non-resolution of the first alarm, a prompt submitted to an LLM or VLM may include contextual data for an event, wherein the contextual data is represented as a knowledge graph. The provision of contextual data may enable an improved reproducibility of reasonings by providing context on how entities and their relationships are connected within a network of traffic-related data in an event.

In some embodiments, a request from the human user (operation 108) may be a request to suppress all second alarms when the at least one reasoning for non-resolution of the first alarm is identified from event data of the second alarm; and the agent application may create (operation 110) an event-specific suppression agent application to suppress all second alarms when the at least one reasoning for non-resolution of the first alarm is reproducible from event data for the second alarm.

For a case in which no VLM is needed and the prompt is submitted to a LLM to interpret the video, a reason could be 'we do not need these alarms during working hours as the event is not important during these particular hours'.

For example, a second alarm may be received, at the computer memory, over a user interface.

The at least one reasoning for non-resolution of the first alarm from event data of the second alarm may be reproduced by the suppression agent application via the computer memory. When the at least one reasoning for non-resolution of the first alarm is reproducible from event data of the second alarm, the at least one reasoning for non-resolution of the first alarm may be recorded and the suppression agent application may suppress the second alarm. Event data may include the event type, such as the nature of the alarm or trigger; a timestamp; a device identifier, such as an identifier of the camera, sensor or system that generated the alarm; an event identifier; and an indication of the event severity, e.g. an importance level of the alarm. Contextual data may be supplementary information that helps a human operator or automated system interpret the event. Contextual data for an event may include location metadata, e.g. the physical location of the event; historical data, e.g. previous events relevant to the current alarm. Contextual data may be retrieved from one or more of: video data associated with a device, image data associated with a device, image metadata, video metadata, system information of the device used to retrieve the image data or video data, and prompts in the creation of an agent application. In some embodiments, reproducibility of the human user's reasoning is assessed with respect to the first alarm and associated event data selected from one or more of: image, video, associated metadata, associated embeddings and knowledge graph. In some embodiments, metadata items and embeddings may be supplemented by contextual data represented in knowledge graphs. A knowledge graph may include data represented as relationships between at least one reasoning from the human user and at least one reasoning reproduced by the agent application. Relationships of knowledge graphs may have been derived outside a single-task analytics that can be used in the production of metadata items.

Advantageously, the representation of data items as a knowledge graph may improve the identification of similarities between at least one reasoning from the human user and at least one reasoning reproduced by the agent application by transforming raw descriptive data into a structured, interconnected web of meaning, enabling richer search and analysis of similarity. A knowledge graph may include data items that disclose relationships between at least one reasoning from the human user and at least one reasoning reproduced by the agent application in form of semantic descriptions in text form. Knowledge graphs may be generated from metadata items and embeddings. For example, knowledge graphs may be generated from video metadata items and embeddings in the assessment of the similarity between at least one reasoning from the human user and at least one reasoning reproduced by the agent application. A representation of data items in the form of a knowledge graph means organizing data items as a network of interconnected entities and relationships, rather than as isolated data fields or tables. Nodes may be entities within a knowledge graph that can represent an object or concept - for example, a video assembly, camera, location, person, or event. Knowledge graphs may include data items that disclose relationships between one or more video assemblies based on external characteristics such as relationships between objects, such as a traffic intersection: A knowledge graph for monitoring traffic intersections using cameras can represent relationships between objects such as intersections, vehicles, pedestrians, traffic signals, and events. A camera installed at an intersection may detect vehicles and pedestrians, linking those detections to specific traffic events like congestion or red-light violations. The graph can also connect traffic signals that control intersections and weather conditions that influence traffic flow or incident likelihood. This interconnected structure may allow real-time monitoring, adaptive signal control, and predictive analytics to improve traffic safety and efficiency.

In some embodiments, knowledge graphs include metadata items and embeddings, and the knowledge graphs are compared in the assessment of the similarity between the at least one reasoning from the human user and the at least one reasoning reproduced by the agent application, wherein the knowledge graphs contextualizing the at least one reasoning from the human user are compared with the knowledge graphs contextualizing the at least one reasoning reproduced by the agent application. Reproducibility of the at least one reasoning by the agent application may be assessed by comparing distances between vectorized embeddings of the at least one reasoning from the human user and the at least one reasoning reproduced by the agent application. For example, a vectorized embedding may represent, a person wearing a yellow hard hat, and the alarm would only become relevant when a person not wearing such a yellow hard hat would enter a building site. As a result, a measure of a distance between vectorized embeddings can capture visual similarity.

In some embodiments, in another operation, creating an event-specific suppression agent application is created by generating a prompt from the reproduced reasoning including instructions for suppressing the alarms for future event data having the same event type. Nonlimiting example instructions for suppressing an alarm for future event data having the same event type may read "If there's a person in the scene, don't raise the alarm.".

In some embodiments, in another operation, creating an event-specific suppression agent application is created by generating an executable script from the reproduced reasoning including instructions for suppressing the alarms for future event data having the same event type.

In some embodiments, when the at least one reasoning from the human user for non-resolution of the alarm cannot be reproduced by the agent application, the reproduction attempt is added as a negative example to a training set of reasonings for the reproduction of the at least one reasoning. It may be re-attempted to request the agent application to reproduce the at least one reasoning via the inclusion of contextual data, wherein the contextual data includes the training set of negative examples of reasonings.

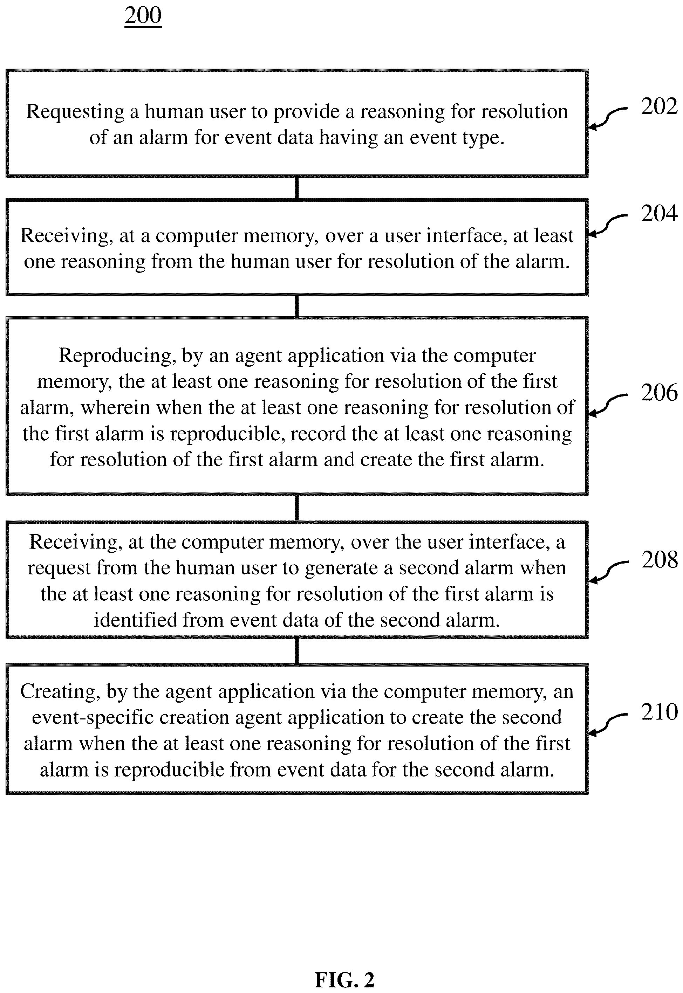

FIG. 2 shows a flowchart of an example method 200 of generating an alarm response agent application. An alarm response agent application attempts to reproduce reasonings for the resolution or non-resolution of alarms from event data. Method 200 or some operations within method 200 may be executed, for example by processor 303 of computing device 302, processor 311 of user device 210 or processor 321 of surveillance device 320 shown in Fig. 3 or computing device 700 shown in Fig. 7.

In operation 202, a human user is requested to provide at least one reasoning for resolution of a first alarm for event data having an event type. For example, a human user using a computing device, e.g. computing device 302, is prompted by a user interface to provide input, e.g. in textual or an audio recording, for the resolution of a first alarm. An alarm may be resolved when the alarm has been reviewed, verified, and manually closed by a human operator.

A human user may be, for example, a security operator, analyst, or investigator who manually reviews alarms triggered for events by surveillance systems (e.g., motion detection, unauthorized access, or facial recognition matches) to determine whether they represent true security incidents that require a resolution of the alarm, or false alarms that do not require a resolution of the alarm.

In operation 204, the at least one reasoning from the human user for resolution of the first alarm is received at a computer memory, over a user interface. Reasonings received from a human user may be technical, operational, or human-related reasons. Resolution typically occurs once the cause of the alarm is identified, appropriate action is taken, and no further follow-up is required. Examples for reasons for resolution of an alarm may be: a) a verified security event, e.g. a confirmed intrusion or trespassing; b) an unauthorized access attempt; or c) the verification of a suspicious activity. An at least one reasoning from a human user may include one or more of: textual data, image data, and video data. Textual data may include a written explanation by the human user, e.g. "confirmed false alarm - cleaning staff present". Image data may include a frame from a camera feed, e.g. a snapshot showing an authorized employee. Video data may include a short clip of an event or camera feed, e.g. a 15-second clip showing an officer checking area. In some embodiments, an at least one reasoning from the human user includes a segmented image and textual data. A segmented image may be an image that has been processed to divide it into distinct regions or segments, each representing a specific object, area, or feature of interest. For example, in a semantic segmentation, each pixel is classified into a category (e.g., person, road, building); every pixel belonging to a person may be colored blue; background pixels may be colored gray.

In operation 206, an agent application may reproduce, via the computer memory, the at least one reasoning for resolution of the first alarm. When the at least one reasoning for resolution of the first alarm is reproducible, the at least one reasoning for resolution of the first alarm may be recorded and the first alarm may be created.

In operation 208, a request from the human user may be received, at the computer memory, over the user interface, to generate a second alarm when the at least one reasoning for resolution of the first alarm is identified from event data of the second alarm.

In operation 210, an event-specific generation agent application may be created, by the agent application via the computer memory, to generate the second alarm when the at least one reasoning for resolution of the first alarm is reproducible from event data for the second alarm. In some embodiments, an agent application reproduces the at least one reasoning by generating a prompt from the at least one reasoning received from the human user and submitting the prompt to one of: a Large Language Model "LLM" and a Vision Language Model "VLM". For example, a prompt which includes a reasoning received from the human user may read "If there's a box blocking the door, I want a particular new alarm". An agent application may reproduce the prompt, e.g. having the following wording: "Prompt a VLM for a scene description and check whether such a box (and its relationship with the door) is noted therein".

A second alarm may be received, at the computer memory, over a user interface.

The at least one reasoning for resolution of the first alarm from event data of the second alarm may be reproduced by the generation agent application via the computer memory. When the at least one reasoning for resolution of the first alarm is reproducible from event data of the second alarm, the at least one reasoning for resolution of the first alarm may be recorded and the generation agent application may create the second alarm. Event data may include the event type, such as the nature of the alarm or trigger; a timestamp; a device identifier, such as an identifier of the camera, sensor or system that generated the alarm; an event identifier; and an indication of the event severity, e.g. an importance level of the alarm. Contextual data may be supplementary information that helps a human operator or automated system interpret the event. Contextual data may include location metadata, e.g. the physical location of the event; historical data, e.g. previous events relevant to the current alarm. Contextual data may be retrieved from one or more of: video data associated with a device, image data associated with a device, image metadata, video metadata, system information of the device used to retrieve the image data or video data, and prompts in the creation of an agent application. In some embodiments, reproducibility of the human user's reasoning is assessed with respect to the first alarm and associated event data selected from one or more of: image, video, associated metadata, associated embeddings and knowledge graph. Reproducibility of the at least one reasoning by the agent application may be assessed by comparing distances between vectorized embeddings of the at least one reasoning from the human user and the at least one reasoning reproduced by the agent application. For example, the reproducibility between vectorized embeddings could be compared by identifying a selection of a vectorized embedding (and, for example an implicit surrounding region of an embedding space of the vectorized embedding) that is predefined, and identifying whether or not such a vectorized embedding can signal the presence, e.g. of a person wearing a hard-hat.

In some embodiments, in another operation, an event-specific alarm creation agent application is provided by generating a prompt from the reproduced reasoning including instructions for creating alarms for future event data having the same event type.

In some embodiments, in another operation, an event-specific alarm creation agent application is provided by generating an executable script from the reproduced reasoning including instructions for creating the alarms for future event data having the same event type.

In some embodiments, when the at least one reasoning from the human user for resolution of the alarm cannot be reproduced by the agent application, the reproduction attempt is added as a negative example to a training set of reasonings for the reproduction of the at least one reasoning. It may be re-attempted to request the agent application to reproduce the at least one reasoning via the inclusion of contextual data, wherein the contextual data includes the training set of negative examples of reasonings.

FIG. 3 is a schematic drawing of a system 300, according to some embodiments of the invention. System 300 may include a computing device 302 including a processor 303 and storage 304. Computing device 302 may be connected to a computing device 310 of a human operator that includes processor 311. Computing device 302 may be connected to a surveillance device 320 including processor 321. A human operator may be a user, e.g. a video analyst or a human employed in the surveillance industry or a member of the police force who is tasked with the surveillance of a person or a physical object.

Computing devices 302, 310, 320, and 700 may be servers, personal computers, desktop computers, mobile computers, laptop computers, and notebook computers or any other suitable device such as a cellular telephone, personal digital assistant (PDA), video game console, etc., and may include wired or wireless connections or modems. Computing devices 302, 310, 320, and 700 may include one or more input devices, for receiving input from a user (e.g., via a pointing device, click-wheel or mouse, keys, touch screen, recorder/microphone, or other input components). Computers 302, 310, 320, and 700 may include one or more output devices (e.g., a monitor, screen, or speaker) for displaying or conveying data to a user.

Any computing devices of FIGs. 3 and 7 (e.g., 302, 310, 320, and 700), or their constituent parts, may be configured to carry out any of the methods of the present invention. Any computing devices of FIGs. 3 and 7, or their constituent parts, may include an electronic display a user interface, or another engine or module, which may be configured to perform some or all of the methods of the present invention. Systems and methods of the present invention may be incorporated into or form part of a larger platform or a system/ecosystem, such as agent management platforms. The platform, system, or ecosystem may be executed using the computing devices of FIGs. 3 and 7, or their constituent parts.

A processor such as processor 303 of computing device 302 processor 311 of device 310, and/or processor 321 of computing device 320 may be configured to receive event data from one or more of: a device, a camera and a managing non-camera device. A managing non-camera device may be a controller or management unit that oversees camera operations without capturing images itself.

Event data may be a digital file that stores moving visual images frames, often accompanied by audio. It typically contains data items, for example compressed video data, audio tracks, and metadata (such as subtitles or file information).

A processor such as processor 303 of computing device 302 processor 311 of device 310, and/or processor 321 of computing device 320 may be configured to request a human user to provide at least one reasoning for non-resolution of a first alarm for event data having an event type. A reasoning for non-resolution of an alarm may be: a) technical reasons, e.g. sensor malfunction: a smoke detector may continue to trigger due to dust or calibration issues, even after the area is safe; or b) a communication failure: An alarm system cannot send or receive status updates from the device (e.g., network outage or power failure).

A processor such as processor 303 of computing device 302 processor 311 of device 310, and/or processor 321 of computing device 320 may be configured to request a human user to provide a reasoning for resolution of an alarm for event data having an event type. For example, the resolution of an alarm can mean that the underlying issue causing the alarm has been identified, addressed, and verified as cleared. The reasoning for resolution may detail why and how the alarm was resolved, e.g. whether through corrective action, system reset, or confirmation that it was a false alarm.

A processor such as processor 303 of computing device 302 processor 311 of device 310, and/or processor 321 of computing device 320 may be configured to receive, at a computer memory, over a user interface, the at least one reasoning from the human user for non-resolution of the first alarm.

A processor such as processor 303 of computing device 302 processor 311 of device 310, and/or processor 321 of computing device 320 may be configured to receive, at a computer memory, over a user interface, at least one reasoning from the human user for resolution of the alarm. A user interface can receive a reasoning from a human user in form of a free text input, the selection of a pre-defined reasoning (e.g. drop-down or ticking a box) or a combination thereof.

A processor such as processor 303 of computing device 302 processor 311 of device 310, and/or processor 321 of computing device 320 may be arranged to reproduce, the at least one reasoning for non-resolution of the first alarm. When the at least one reasoning for non-resolution of the first alarm is reproducible, the at least one reasoning for non-resolution of the first alarm may be recorded by the agent application and the first alarm may be suppressed.

A processor such as processor 303 of computing device 302 processor 311 of device 310, and/or processor 321 of computing device 320 may be arranged to reproduce, the at least one reasoning for resolution of the first alarm. When the at least one reasoning for resolution of the first alarm is reproducible, the at least one reasoning for resolution of the first alarm may be recorded by the agent application and the first alarm may be created.

A processor such as processor 303 of computing device 302 processor 311 of device 310, and/or processor 321 of computing device 320 may be arranged to receive, at the computer memory, over the user interface, a request from the human user to suppress a second alarm when the at least one reasoning for non-resolution of the first alarm is identified from event data of the second alarm.

A processor such as processor 303 of computing device 302 processor 311 of device 310, and/or processor 321 of computing device 320 may be arranged to receive, at the computer memory, over the user interface, a request from the human user to generate a second alarm when the at least one reasoning for resolution of the first alarm is identified from event data of the second alarm.

A processor, such as processor 303 of computing device 302 processor 311 of device 310, and/or processor 321 of computing device 320, may be configured to create an event-specific suppression agent application to suppress the second alarm when the at least one reasoning for non-resolution of the first alarm is reproducible from event data for the second alarm.

A processor, such as processor 303 of computing device 302 processor 311 of device 310, and/or processor 321 of computing device 320, may be configured to create an event-specific creation agent application to generate the second alarm when the at least one reasoning for resolution of the first alarm is reproducible from event data for the second alarm.

A processor, such as processor 303 of computing device 302 processor 311 of device 310, and/or processor 321 of computing device 320, may be configured to receive, at the computer memory, over the user interface, the second alarm.

A processor, such as processor 303 of computing device 302 processor 311 of device 310, and/or processor 321 of computing device 320, may be configured to reproduce, by the agent application via the computer memory, the at least one reasoning for non-resolution of the first alarm from event data of the second alarm, wherein when the at least one reasoning for non-resolution of the first alarm is reproducible, record the at least one reasoning for non-resolution of the first alarm and suppress the second alarm. For example, an agent application for the reproduction of a reasoning may be triggered by an LLM that interprets a previous textual conversation with an operator over a new set of conditions, including a new event, video, metadata, embeddings, VLM-based scene descriptions, etc.

A processor, such as processor 303 of computing device 302 processor 311 of device 310, and/or processor 321 of computing device 320, may be configured to reproduce, by the agent application via the computer memory, the at least one reasoning for resolution of the first alarm from event data of the second alarm, wherein when the at least one reasoning for resolution of the first alarm is reproducible, record the at least one reasoning for resolution of the first alarm and create the second alarm.

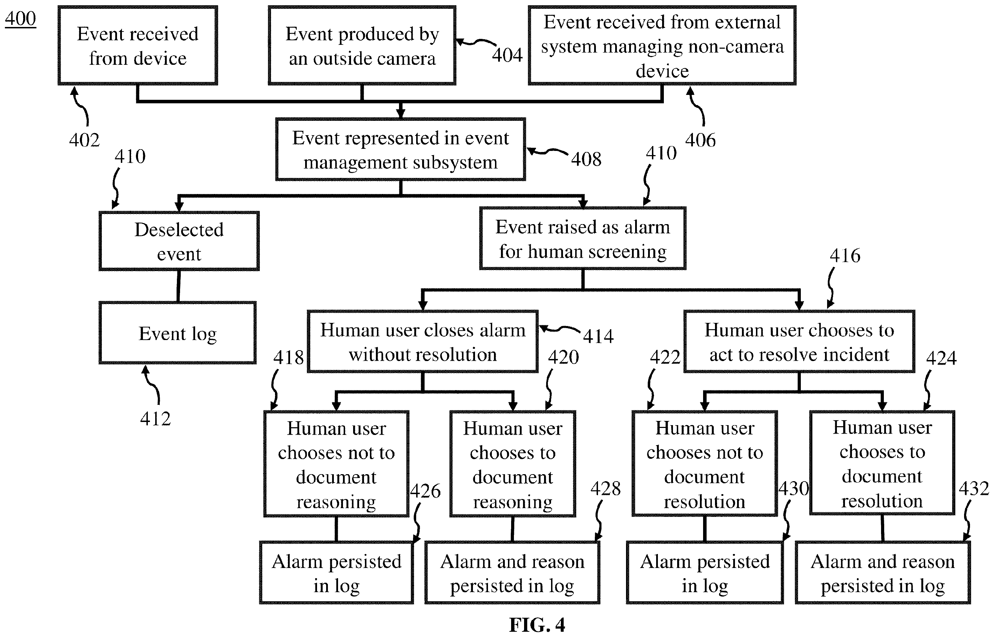

FIG. 4 illustrates an embodiment of a workflow 400 that exemplifies the human user-based separation of alarms for events into non-resolved alarms and resolved alarms. Workflow 400 or some operations within workflow 400 may be executed, for example by processor 303 of computing device 302, processor 311 of user device 210, processor 321 of surveillance device 320 shown in Fig. 3, or computing device 700 shown in Fig. 7.

Events may be represented in an event management subsystem 408. Events may be received from a device (operation 402), e.g. a computing device 302, 310 or 700. Events represented by the event management subsystem 408 may be events produced by an outside camera equipped with video analytics capabilities, e.g. camera 404, which can automatically detect and classify events in external environment. Events represented in the event management subsystem 408 may be events which are received from external system that manages non-camera devices 406.

An event management subsystem may process incoming events from sources 402, 404 or 406. Event management subsystem 408 may automatically deselect events by predetermined rules 410. For example, predetermined rules such as thresholds of parameters or predetermined rules which may be consulted to decide whether to deselect events may include the degree of motion in a video file, a calculated confidence, etc. A deselected event may be stored in a log 412 which records deselected events for a specific period, e.g. a week, a month, a year. A log may be, for example, an append-only database, indexed by time.

Event management subsystem 408 may automatically raise an alarm for human screening for an alarm 410. For example, predetermined rules such as thresholds of parameters or predetermined rules which may be consulted to decide whether to select events may include the degree of motion in a video file, a calculated confidence, etc.

Human screening may be used to close an alarm for an event without resolution (operation 414) or to resolve an event, e.g. an incident, for which an alarm was raised (operation 416). In the case that a human user chooses not to document a reasoning for a non-resolution of an event (operation 418), the alarm for the event may persist in a log (operation 426). In the case that a human user chooses to document reasoning for the non-resolution of an alarm (operation 420), the alarm and reason for the non-resolution of the alarm may persist in a log (operation 428).

In the case that a human user chooses not to document a reasoning for a resolution of an event (operation 422), the alarm for the event may persist in a log (operation 430). In the case that a human user chooses to document reasoning for the resolution of an alarm (operation 424), the alarm and reason for the resolution of the alarm may persist in a log (operation 432).

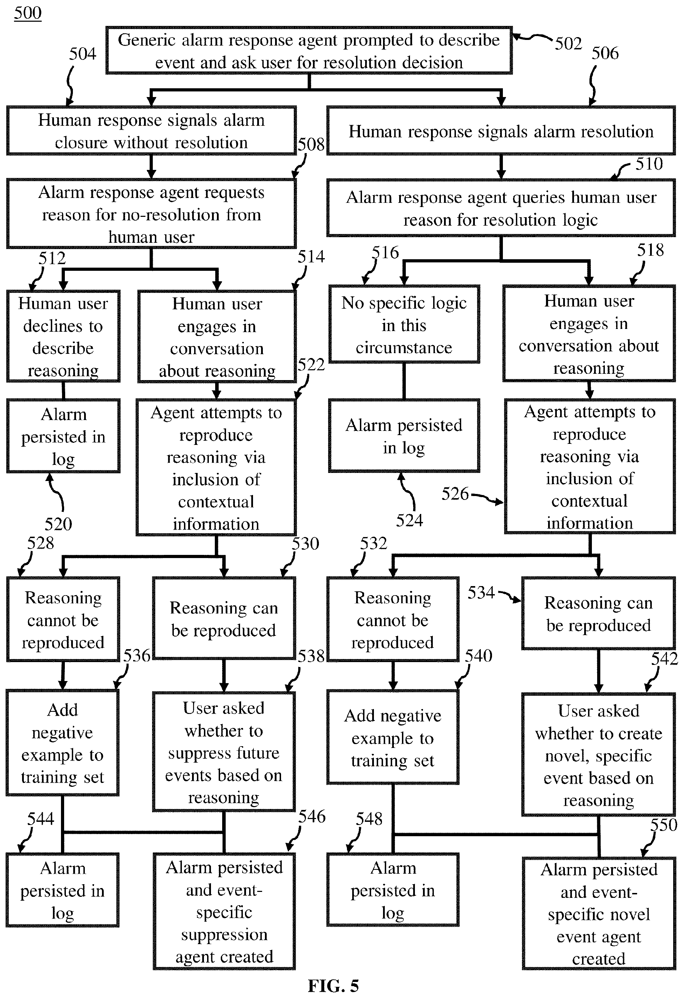

FIG. 5 illustrates an embodiment of a workflow 500 for events for which a management application has decided to raise an alarm to retrieve a human screening for the alarm and event, e.g. operation 410 in FIG. 4. Workflow 500 or some operations within workflow 500 may be executed, for example by processor 303 of computing device 302, processor 311 of user device 210, processor 321 of surveillance device 320 shown in Fig. 3, or computing device 700 shown in Fig. 7.

In operation 502, an agent application, for example generic alarm response agent which handles default alarms for events, may be prompted to describe an event and asks a human user for a resolution decision, e.g. the human user may be prompted via a user interface to decide whether an alarm should be closed without resolution (operation 504) or whether the resolution of an alarm (operation 506) should be pursued. A generic alarm response agent may be a software module which is responsible for handling, analyzing, and responding to alarms in a surveillance or security environment without being tied to a specific alarm type or device. In some embodiments, a generic alarm response agent is not specialized for a single alarm type. It can handle multiple event categories using a common logic or workflow.

In operation 508, the generic alarm response agent may request a human user to provide at least one reasoning for non-resolution of a first alarm for event data having an event type. In response to the request, a human user may decide to decline to describe the reasoning (operation 512). In such a case, the alarm persist in a database, e.g. a log (operation 520). In case that the human user decides to engage in a conversation about the reasoning for non-resolution, generic alarm response agent application may receive at least one reasoning from the human user for non-resolution of the alarm (operation 514).

The generic agent application may attempt to reproduce the at least one reasoning for non-resolution of the first alarm from event data of the second alarm (operation 522). In case that the at least one reasoning for non-resolution of the first alarm is reproducible (operation 530), the human user is queried whether they want to suppress future events based on that reasoning (operation 538). In case that a human user decides to suppress future events based on that reasoning, the alarm persists and an event-specific suppression agent application is created (operation 546). In case that the human user decides not to suppress future events based on the reasoning, the alarm persists in a database, e.g. a log (operation 544).

The agent application may attempt to reproduce the at least one reasoning for non-resolution of the first alarm from event data of the second alarm (operation 522). In case that the at least one reasoning for non-resolution of the first alarm is not reproducible (operation 528), a negative example is added to the training set for the training of the suppression agent application (operation 536) and the alarm persists in a database, e.g. a log (operation 544).

In case that a human user responds to the resolution decision (operation 502) that the resolution of an alarm (operation 506) should be pursued, an alarm response agent may request a human user to provide at least one reasoning for resolution of a first alarm for event data having an event type (operation 510). In response to the request, a human user may decide to decline to describe the reasoning (operation 516). In such a case, the alarm persist in the log (operation 524). In case that the human user decides to engage in a conversation about the reasoning for resolution, alarm response agent application may receive at least one reasoning from the human user for resolution of the alarm (operation 518).

The agent application may attempt to reproduce the at least one reasoning for resolution of the first alarm from event data of the second alarm (operation 522). In case that the at least one reasoning for resolution of the first alarm is reproducible (operation 534), the human user is queried whether they want to create alarms for future events based on that reasoning (operation 542). In case that the human user decides to create alarms for future events based on that reasoning, the alarm may persist and an event-specific alarm creation agent may be generated (operation 550). In case that the human user decides not to create alarms for future events based on the reasoning, the alarm may persist in a log (operation 548).

The agent application may attempt to reproduce the at least one reasoning for resolution of the first alarm from event data of the second alarm (operation 526). In case that the at least one reasoning for resolution of the first alarm is not reproducible (operation 532), a negative example is added to the training set (operation 540) and the alarm persists in a log (operation 548).

Event management subsystem 408 shown in FIG. 408 may be updated and may execute the workflow described in FIG. 5.

Interactions of a human user with a generic alarm response agent, e.g. in operation 502, which may be activated when an event, e.g. an event received from a device (402), an event produced by a video analytics (VA) outside a camera 404 or an event from an external subsystem (406) is represented in an event management system 403 and, based on predefined logic an alarm is raised for the event. As shown in FIG. 5, human interaction of a human user with a generic alarm response agent may result in the generation of a suppression agent 546 or an event creation agent 550. The rightmost state of the two major branches 504 and 506, chosen based on the human response to the alarm (with and without resolution) may lead to the creation of one of two new agents: an alarm suppression agent is linked to the event type 546, or an alarm creation agent is linked to the event type 550.

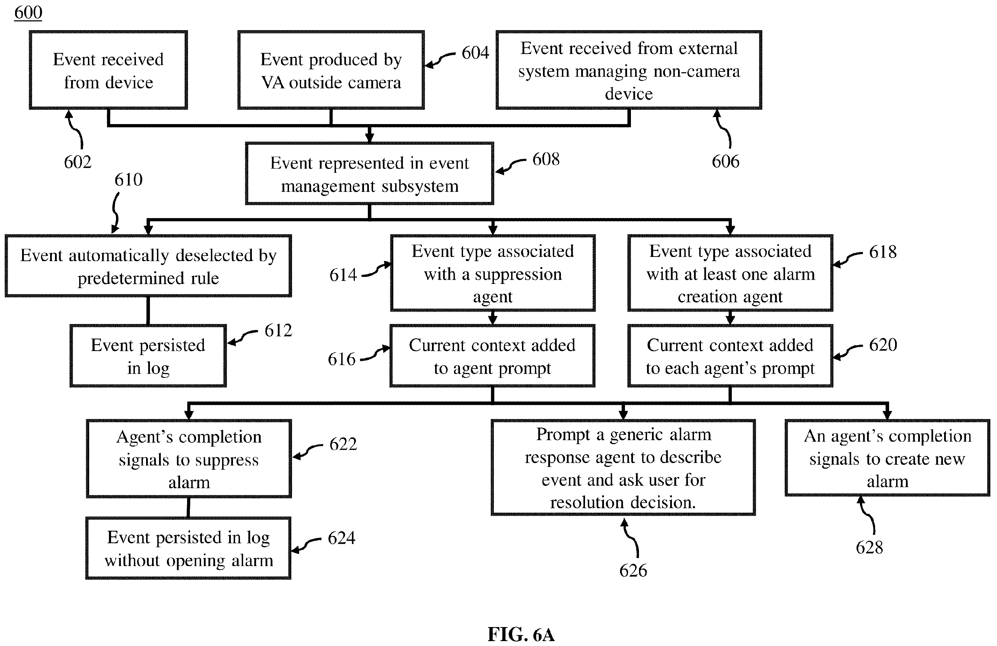

FIG. 6A illustrates an embodiment of a workflow 600 for managing events via an event management application which associates events with a suppression agent or an alarm creation agent. Workflow 600 or some operations within workflow 600 may be executed, for example by processor 303 of computing device 302, processor 311 of user device 210, processor 321 of surveillance device 320 shown in Fig. 3, or computing device 700 shown in Fig. 7.

Workflow 600 illustrates an updated workflow 400 in which event management system 408 has been modified with workflow 500, and includes a generation or updating process for an alarm response agent application. The generation or updating process for an alarm response agent application may include the association of an event by the event management subsystem with one of three categories 610, 614 or 618: An event may be automatically deselected when event data of an event fulfills a predetermined rule (operation 610). In this case, the event persists in the log (612). An event type of an event may be associated with a suppression agent (614). In such a case, context of the event may be added to the agent prompt (616). An event type of an event may be associated with an alarm creation agent (618). In such a case, context may be added to each agent's prompt (620).

When context has been added to an agent prompt for an event whose event type has been associated with a suppression agent, an agent's completion may signal to suppress an alarm (622). The corresponding event persists in a log without opening an alarm (624).

In some cases, when context has been added to an agent prompt for an event whose event type has been associated with a suppression agent, or when context has been added to an agent prompt for an event whose event type has been associated with at least one alarm creation agent, a generic alarm response agent is prompted to describe an event and ask a human user for resolution decision (626) as described in the workflow in FIG. 5.

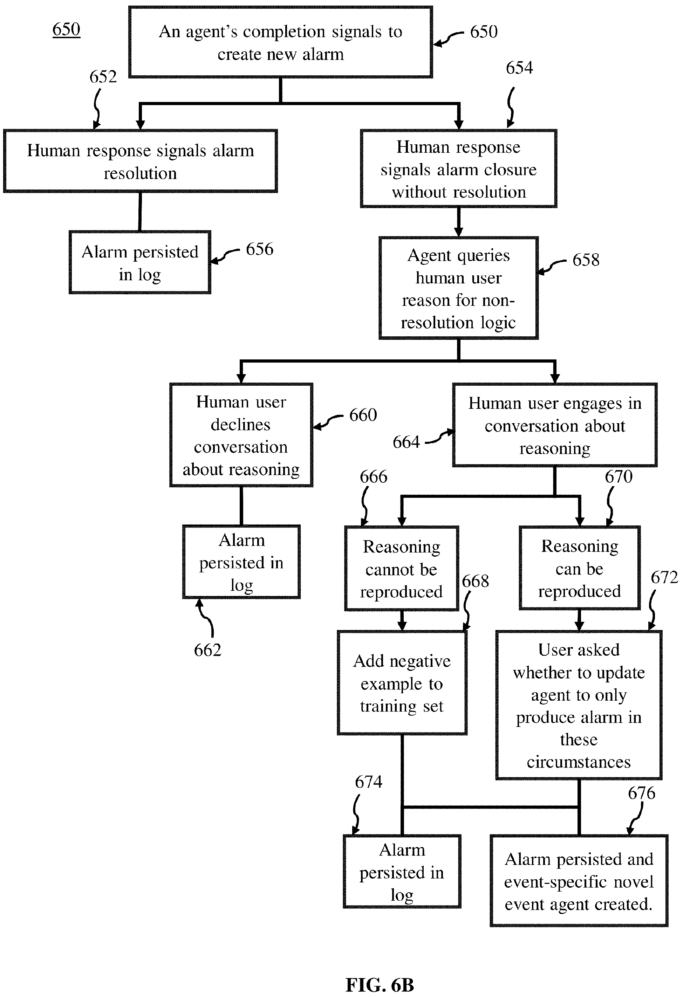

When context has been added to an agent prompt for an event whose event type has been associated with an alarm creation agent, an agent's completion may signal to create a new alarm (628). The workflow for the creation of a new alarm 628 is illustrated in FIG. 6B.

FIG. 6B illustrates an embodiment of a workflow 650 for creating a new alarm. Workflow 650 or some operations within workflow 650 may be executed, for example by processor 303 of computing device 302, processor 311 of user device 210, processor 321 of surveillance device 320 shown in Fig. 3, or computing device 700 shown in Fig. 7. An agent's completion may signal to create a new alarm. A human user may respond to the agent's suggestion to create a new alarm with alarm resolution (operation 652). In this case, the alarm persists in the log (operation 656). A human user may respond with a request to close the alarm without resolution (operation 654). In this case, the agent may query a human user for non-resolution of the alarm (operation 658). In response to this query, a human user may decline to provide a reason for the non-resolution of an alarm (operation 660). In this case, the alarm persists in the log (operation 662). A human user may respond to the request in operation 658 with a response in which the human user provides at least one reason for the non-resolution.

An agent application may attempt to reproduce the reasoning for non-resolution. In case that the reasoning cannot be reproduced (operation 666), the alarm in combination with the reason provided by the human is provided as a negative example to a training set for the agent application (operation 668). The alarm may persist in the log (operation 674).

An agent application may attempt to reproduce the reasoning for non-resolution. In case that the reasoning can be reproduced (operation 670), a human user is asked whether to update the agent to only produce an alarm in these circumstances (operation 672). In case that the human user decides not to update the alarm, the alarm persists in the log. In case that the human user decides to update the alarm, an event-specific novel event agent is created (operation 676).

### Applications

### 1) Alarm Management

One application of events in physical security systems may be to direct human attention via the maintenance of a list of active alarms for such events, which include an event data and an event type, that a human user can view and close. Viewing and closing of alarms for events may proceed by a human user interacting being presented with a user interface provided, for example by computing device 310 or 700. A list of active alarms may be provided in a prioritized order. Alarms for events may be directly raised by a device, e.g. a device 302 or 700. A device, e.g. device 302 or 700, may include one or more sensors which can detect anomalies in events. Software may include a logic that generates alarms for an event, for example when a sensor detects an anomaly in a value, e.g. when a value for a parameter measured by a sensor lies outside a pre-defined threshold value. Alarms may also be raised by means external to a device within the overall physical security system, e.g. in software outside the device, including management software of additional devices (access control, etc.) or standalone video analytics software. For example, software executed by a device for monitoring access control to a fire exit door may trigger an alarm when a sensor connected to the device detects that the door has been opened. The alarm and event data including an event type may be sent from the device for monitoring access control to a device that provides a user interface for the communication of alarms for events to a human user, e.g. via device 302 or device 700.

Within an alarm management system, such as event management subsystem 408, an act of closing an alarm can involve documentation of the reason and the action taken in response to an alarm by a human user, if any. This human user may be a human operator in an operations center, a security guard or another respondent. Closing of an alarm may involve selecting a set of fixed reasons for the closure of an alarm, or entering a free text explanation for the alarm closure.

A human user may engage with an agent application, e.g. an alarm suppression agent or an alarm generation agent, via user interfaces, e.g. conversational interfaces, which enable human users to provide input in form of, for example, free text (via LLMs) or a combination of free text and other modalities such as by enabling a human user to provide or review images/video (via VLMs). Input from a human user may be analyzed by a non-predefined logic to capture the intent of a human user. For example, a non-predefined logic may identify whether or not a human provides a response that signals alarm resolution or a human provides a response that signals that the human user intends to close the alarm without a resolution. The conversation between human user and agent application may be initiated by an automated system prompt requesting a textual description of the alarm for an event and the action the human user has taken in the alarm manager (e.g. closing the alarm). In some embodiments, an automated system may ask for context as part of a textual description of the alarm (e.g. from a knowledge graph) and a description/summarization of video or images associated with the alarm and its causing event.

At the end of the conversation between a human user and an agent application, a model may be used to produce an event-specific agent application in form of:
- as a prompt, capturing the human user's intention in judging how an alarm for an event should be dealt with by invoking an LMM in future occurrences;
- as an executable script, either in a rule language or programming language, to evaluate and handle future occurrences of the event that otherwise causes the alarm.

In case that a prompt capturing the human user's intention in judging how an alarm for an event should be dealt with by invoking an LMM in future occurrences is generated, the prompt may be presented to either to the original model or another LLM/VLM, and the subsequent completion used to decide whether to suppress the alarm, to down-prioritize the alarm, or to create a new alarm. This prompt might be provided to that model together with context from a knowledge graph and/or images and video related to an event for which an alarm was raised.

### 2) Event Triggered Actions

An application of events may be to cause actions, e.g. alarms, via a physical security system that do not need human user interaction. Such actions may include instructions sent to a camera device (e.g. movement of PTZ cameras), to another device (e.g. a door lock), or changes within the configuration of the physical security system itself (e.g. video recording behaviors), for example a device 302, 310, 320 shown in Fig. 3.

In a physical security system, there may exist a rule system where rules are triggered by events and lead to certain actions in the processing of these events. A log of events, e.g. an events log as shown in FIGs. 4 and 5, may be maintained by a system that a human user can review, without the use of an alarm management system.

For example, a human user can select certain events in the log for suppression or refinement, proceeding according to the workflow that results from alarm management.

FIG. 7 shows a high-level block diagram of an exemplary computing device which may be used with embodiments of the present invention. Computing device 700 may include a controller or processor 705 that may be, for example, a central processing unit processor (CPU), a chip or any suitable computing or computational device, an operating system 715, a memory 720, a storage 730, input devices 735 and output devices 740 such as a computer display or monitor displaying for example a computer desktop system. Each of modules and equipment and other devices and modules discussed herein, e.g. modules in FIGS. 2, 3, 4, 5, 6A, 6B may be or include, or may be executed by, a computing device such as included in FIG. 7 although various units among these modules may be combined into one computing device.

Operating system 715 may be or may include any code segment designed and/or configured to perform tasks involving coordination, scheduling, arbitration, supervising, controlling or otherwise managing operation of computing device 700, for example, scheduling execution of programs. Memory 720 may be or may include, for example, a Random Access Memory (RAM), a read only memory (ROM), a Dynamic RAM (DRAM), a Synchronous DRAM (SD-RAM), a double data rate (DDR) memory chip, a Flash memory, a volatile memory, a non-volatile memory, a cache memory, a buffer, a short term memory unit, a long term memory unit, or other suitable memory units or storage units. Memory 720 may be or may include a plurality of, possibly different memory units. Memory 720 may store for example, instructions (e.g. code 725) to carry out a method as disclosed herein, and/or data.

Executable code 725 may be any executable code, e.g., an application, a program, a process, task or script. Executable code 725 may be executed by controller 705 possibly under control of operating system 715. For example, executable code 725 may be one or more applications performing methods as disclosed herein, for example those of FIGs. 1, 2, 3, 4, 5, 6A, 6B or other figures, or other methods, according to embodiments of the present invention. In some embodiments, more than one computing device 700 or components of device 700 may be used for multiple functions described herein. For the various modules and functions described herein, one or more computing devices 700 or components of computing device 700 may be used. Devices that include components similar or different to those included in computing device 700 may be used, and may be connected to a network and used as a system. One or more processor(s) 705 may be configured to carry out embodiments of the present invention by, for example, executing software or code. Storage 730 may be or may include, for example, a hard disk drive, a floppy disk drive, a Compact Disk (CD) drive, a CD-Recordable (CD-R) drive, a universal serial bus (USB) device or other suitable removable and/or fixed storage unit. Data may be stored in a storage 730 and may be loaded from storage 730 into a memory 720 where it may be processed by controller 705. In some embodiments, some of the components shown in FIG. 7 may be omitted.

Input devices 735 may be or may include a mouse, a keyboard, a touch screen or pad or any suitable input device. It will be recognized that any suitable number of input devices may be operatively connected to computing device 700 as shown by block 735. Output devices 740 may include one or more displays, speakers and/or any other suitable output devices. It will be recognized that any suitable number of output devices may be operatively connected to computing device 700 as shown by block 740. Any applicable input/output (I/O) devices may be connected to computing device 700, for example, a wired or wireless network interface card (NIC), a modem, printer or facsimile machine, a universal serial bus (USB) device or external hard drive may be included in input devices 735 and/or output devices 740.

Embodiments of the invention may include one or more article(s) (e.g. memory 720 or storage 730) such as a computer or processor non-transitory readable medium, or a computer or processor non-transitory storage medium, such as for example a memory, a disk drive, or a USB flash memory, encoding, including or storing instructions, e.g., computer-executable instructions, which, when executed by a processor or controller, carry out methods disclosed herein.

The aforementioned flowcharts and diagrams illustrate the architecture, functionality, and operation of possible implementations of systems, methods and computer program products according to various embodiments of the present invention. In this regard, each portion in the flowchart or portion diagrams may represent a module, segment, or portion of code, which comprises one or more executable instructions for implementing the specified logical function(s). It should also be noted that, in some alternative implementations, the functions noted in the portion may occur out of the order noted in the figures. For example, two portions shown in succession may, in fact, be executed substantially concurrently, or the portions may sometimes be executed in the reverse order, depending upon the functionality involved, It will also be noted that each portion of the portion diagrams and/or flowchart illustration, and combinations of portions in the portion diagrams and/or flowchart illustration, can be implemented by special purpose hardware-based systems that perform the specified functions or acts, or combinations of special purpose hardware and computer instructions.

As will be appreciated by one skilled in the art, aspects of the present invention may be embodied as a system or an apparatus. Accordingly, aspects of the present invention may take the form of an entirely hardware embodiment or an embodiment combining software and hardware aspects that may all generally be referred to herein as a "circuit," "module" or "system."

The aforementioned figures illustrate the architecture, functionality, and operation of possible implementations of systems and apparatus according to various embodiments of the present invention. Where referred to in the above description, an embodiment is an example or implementation of the invention. The various appearances of "one embodiment," "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions. It will further be recognized that the aspects of the invention described hereinabove may be combined or otherwise coexist in embodiments of the invention.

It is to be understood that the phraseology and terminology employed herein is not to be construed as limiting and are for descriptive purpose only.

The principles and uses of the teachings of the present invention may be better understood with reference to the accompanying description, figures and examples.

It is to be understood that the details set forth herein do not construe a limitation to an application of the invention.

Furthermore, it is to be understood that the invention can be carried out or practiced in various ways and that the invention can be implemented in embodiments other than the ones outlined in the description above.

It is to be understood that the terms "including", "comprising", "consisting" and grammatical variants thereof do not preclude the addition of one or more components, features, steps, or integers or groups thereof and that the terms are to be construed as specifying components, features, steps or integers.

If the specification or claims refer to "an additional" element, that does not preclude there being more than one of the additional element.

It is to be understood that where the claims or specification refer to "a" or "an" element, such reference is not be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

The descriptions, examples and materials presented in the claims and the specification are not to be construed as limiting but rather as illustrative only.

Meanings of technical and scientific terms used herein are to be commonly understood as by one of ordinary skill in the art to which the invention belongs, unless otherwise defined.

The present invention may be implemented in the testing or practice with materials equivalent or similar to those described herein.

While the invention has been described with respect to a limited number of embodiments, these should not be construed as limitations on the scope of the invention, but rather as exemplifications of some of the preferred embodiments. Other or equivalent variations, modifications, and applications are also within the scope of the invention. Accordingly, the scope of the invention should not be limited by what has thus far been described, but by the appended claims and their legal equivalents.

## Claims

1. A method of generating an alarm response agent application, the method comprising:
requesting a human user to provide at least one reasoning for non-resolution of a first alarm for event data having an event type;
receiving, at a computer memory, over a user interface, the at least one reasoning from the human user for non-resolution of the first alarm;
reproducing, by an agent application via the computer memory, the at least one reasoning for non-resolution of the first alarm, wherein when the at least one reasoning for non-resolution of the first alarm is reproducible, record the at least one reasoning for non-resolution of the first alarm and suppress the first alarm;
receiving, at the computer memory, over the user interface, a request from the human user to suppress a second alarm when the at least one reasoning for non-resolution of the first alarm is identified from event data of the second alarm; and
creating, by the agent application via the computer memory, an event-specific suppression agent application to suppress the second alarm when the at least one reasoning for non-resolution of the first alarm is reproducible from event data for the second alarm.

2. The method of claim 1, wherein the at least one reasoning from the human user comprises one or more of: textual data, image data and video data.

3. The method of claim 1, wherein the event data comprises contextual data retrieved from one or more of: video data associated with a device, image data associated with a device, image metadata, video metadata, system information of the device used to retrieve the image data or video data, or data encoded in a knowledge graph.

4. The method of claim 1, wherein the at least one reasoning from the human user comprises features derived from one of: segmented image data and video data.

5. The method of claim 1, wherein the agent application reproduces the at least one reasoning by generating a prompt from the at least one reasoning received from the human user and submitting the prompt to at least one of: a Large Language Model "LLM" and a Vision Language Model "VLM".

6. The method of claim 1, wherein the reproducibility of the human user's reasoning is assessed with respect to the first alarm and associated event data selected from one or more of: image, video, associated metadata, associated embeddings and knowledge graph.

7. The method of claim 1, wherein creating the event-specific suppression agent application comprises one of:
a) generating a prompt from the reproduced reasoning comprising instructions for suppressing the alarms for future event data having the same event type; and
b) generating an executable script from the reproduced reasoning comprising instructions for suppressing the alarms for future event data having the same event type.

8. The method of claim 1, wherein when the at least one reasoning from the human user for non-resolution of the alarm cannot be reproduced by the agent application, adding the reproduction attempt as a negative example to a training set of reasonings for the reproduction of the at least one reasoning, and re-attempting to request the agent application to reproduce the at least one reasoning via the inclusion of contextual data, wherein the contextual data comprises the training set of negative examples of reasonings.

9. A method of generating an alarm response agent application, the method comprising:
requesting a human user to provide a reasoning for resolution of an alarm for event data having an event type;
receiving, at a computer memory, over a user interface, at least one reasoning from the human user for resolution of the alarm;
reproducing, by an agent application via the computer memory, the at least one reasoning for resolution of the first alarm, wherein when the at least one reasoning for resolution of the first alarm is reproducible, record the at least one reasoning for resolution of the first alarm and create the first alarm;
receiving, at the computer memory, over the user interface, a request from the human user to generate a second alarm when the at least one reasoning for resolution of the first alarm is identified from event data of the second alarm;
creating, by the agent application via the computer memory, an event-specific creation agent application to create the second alarm when the at least one reasoning for resolution of the first alarm is reproducible from event data for the second alarm.

10. The method of claim 9, wherein the reasoning from the human user comprises one or more of: textual data, image data and video data.

11. The method of claim 9, wherein the event data comprises contextual data retrieved from one or more of: video data associated with a device, image data associated with a device, image metadata, video metadata, system information of the device used to retrieve the image data or video data, or data encoded in a knowledge graph.

12. An alarm response system for the association of alarms to events based on previously recorded events, the system comprising:
a computer memory arranged to receive event data from one or more of: a device, a camera and a managing non-camera device; and
a computing processor arranged to:
request a human user to provide at least one reasoning for non-resolution of a first alarm for event data having an event type;
receive, at a computer memory, over a user interface, the at least one reasoning from the human user for non-resolution of the first alarm;
reproduce, by an agent application via the computer memory, the at least one reasoning for non-resolution of the first alarm, wherein when the at least one reasoning for non-resolution of the first alarm is reproducible, record the at least one reasoning for non-resolution of the first alarm and suppress the first alarm;
receive, at the computer memory, over the user interface, a request from the human user to suppress a second alarm when the at least one reasoning for non-resolution of the first alarm is identified from event data of the second alarm;
create, by the agent application via the computer memory, an event-specific suppression agent application to suppress the second alarm when the at least one reasoning for non-resolution of the first alarm is reproducible from event data for the second alarm.

13. An alarm response system for the association of alarms to events based on previously recorded events, the system comprising:
a computer memory arranged to receive event data from one or more of: a device, a camera and a managing non-camera device; and
a computing processor arranged to:
request a human user to provide a reasoning for resolution of an alarm for event data having an event type;
receive, at a computer memory, over a user interface, at least one reasoning from the human user for resolution of the alarm;
reproduce, by an agent application via the computer memory, the at least one reasoning for resolution of the first alarm, wherein when the at least one reasoning for resolution of the first alarm is reproducible, record the at least one reasoning for resolution of the first alarm and create the first alarm;
receive, at the computer memory, over the user interface, a request from the human user to generate a second alarm when the at least one reasoning for resolution of the first alarm is identified from event data of the second alarm;
create, by the agent application via the computer memory, an event-specific creation agent application to generate the second alarm when the at least one reasoning for resolution of the first alarm is reproducible from event data for the second alarm.

14. A non-transitory computer readable medium for generating an alarm response agent application comprising a set of instructions that, when executed, cause at least one computer processor to:
request a human user to provide at least one reasoning for non-resolution of a first alarm for event data having an event type;
receive, at a computer memory, over a user interface, the at least one reasoning from the human user for non-resolution of the first alarm;
reproduce, by an agent application via the computer memory, the at least one reasoning for non-resolution of the first alarm, wherein when the at least one reasoning for non-resolution of the first alarm is reproducible, record the at least one reasoning for non-resolution of the first alarm and suppress the first alarm;
receive, at the computer memory, over the user interface, a request from the human user to suppress a second alarm when the at least one reasoning for non-resolution of the first alarm is identified from event data of the second alarm;
create, by the agent application via the computer memory, an event-specific suppression agent application to suppress the second alarm when the at least one reasoning for non-resolution of the first alarm is reproducible from event data for the second alarm.

15. A non-transitory computer readable medium for generating an alarm response agent application comprising a set of instructions that, when executed, cause at least one computer processor to:
request a human user to provide a reasoning for resolution of an alarm for event data having an event type;
receive, at a computer memory, over a user interface, at least one reasoning from the human user for resolution of the alarm;
reproduce, by an agent application via the computer memory, the at least one reasoning for resolution of the first alarm, wherein when the at least one reasoning for resolution of the first alarm is reproducible, record the at least one reasoning for resolution of the first alarm and create the first alarm;
receive, at the computer memory, over the user interface, a request from the human user to generate a second alarm when the at least one reasoning for resolution of the first alarm is identified from event data of the second alarm;
create, by the agent application via the computer memory, an event-specific creation agent application to generate the second alarm when the at least one reasoning for resolution of the first alarm is reproducible from event data for the second alarm.
